# EUROPÄISCHE PATENTANMELDUNG

(11) **EP 1 941 825 A2**
(43) Veröffentlichungstag der Anmeldung: **09.07.2008**
(21) Anmeldenummer: 07023912.4
(22) Anmeldetag: 11.12.2007
(51) Int. Cl.: A47L 13/512

(54) **Befestigungselement**

(30) Priorität: 08.01.2007 DE 102007001981
(71) Anmelder: Carl Freudenberg KG, 69469 Weinheim (DE)
(72) Erfinder: Clemen, Hans-Jörg, 69115 Heidelberg (DE); Arnold, Peter L., 64646 Heppenheim (DE)

(57) **Zusammenfassung**

Befestigungselement (1) bestehend aus einem Grundkörper (2) der eine erste und eine zweite Aufnahme (3, 4) aufweist, wobei die erste Aufnahme (3) ringförmig ausgebildet ist und die zweite Aufnahme (4) durch klammerartige Schenkel (5, 6) gebildet ist.

## Beschreibung

### Technisches Gebiet

Die Erfindung betrifft ein Befestigungselement bestehend aus einem Grundkörper der eine erste und eine zweite Aufnahme aufweist.

### Stand der Technik

Derartige Befestigungselemente finden vorwiegend bei Reinigungsgeräten mit Stiel ihre Verwendung. Dort dienen sie der schnell lösbaren Befestigung von Gegenständen. Ein möglicher Verwendungszweck ist das Verbinden eines Reinigungsbesens mit Stiel mit einer Kehrschaufel mit Stiel. Durch das Befestigungselement können beide Reinigungsgeräte bei Nichtbenutzung miteinander verbundenen werden, um diese leichter zu verstauen und einfacher Griffbereit zu haben. Die Aufnahmen bekannter Befestigungselemente sind dabei jeweils für einen bestimmten Stieldurchmesser ausgelegt. Daher sind für jeden Stieldurchmesser und auch für jede Stielkombination jeweils spezielle Befestigungselemente erforderlich. Des Weiteren sind die Befestigungselemente aufgrund der hohen Haltekräfte schwer zu bedienen.

### Darstellung der Erfindung

Der Erfindung liegt die Aufgabe zugrunde, ein Befestigungselement bereitzustellen, an dessen zumindest einer Aufnahme Stiele verschiedener Durchmesser bei einfacher Handhabung befestigbar sind.

Diese Aufgabe wird mit den Merkmalen von Anspruch 1 gelöst. Auf vorteilhafte Ausgestaltungen nehmen die Unteransprüche Bezug.

Zur Lösung der Aufgabe ist die erste Aufnahme ringförmig ausgebildet und die zweite Aufnahme ist durch klammerartige Schenkel gebildet. Mittels der ringförmigen Aufnahme erfolgt eine, möglicherweise auch dauerhafte, Befestigung an einem ersten Stiel, beispielsweise einer Kehrschaufel mit Stiel. Die zweite Aufnahme, die durch die klammerartigen Schenkel gebildet ist, dient der Aufnahme beispielsweise eines Kehrbesens mit Stiel. Der Kehrbesen kann dann nach der Benutzung mittels des Befestigungselements an der Kehrschaufel befestigt werden. Die klammerartigen Schenkel sind flexibel ausgebildet, passen sich an verschiedene Stieldurchmesser an und fixieren diese. Wenn der Ring geschlossen ausgebildet ist, wird der Ring dauerhaft auf den Stiel aufgeschoben. Diese Befestigung ist besonders sicher.

Die Schenkel können die erste Aufnahme teilweise umfassen. Dadurch ergeben sich Schenkel die in einem weiten Bogen um die erste Aufnahme verlaufen und aufgrund der günstigen Hebelwirkung ergibt sich eine besonders gute Federwirkung. Dadurch ist die zweite Aufnahme besonders flexibel was den Durchmesser des aufzunehmenden Stiels betrifft.

Der Ring der ersten Aufnahme kann unterbrochen sein, so dass sich eine Öffnung ergibt. Dadurch kann das Befestigungselement auch auf Stiele ausgesteckt werden, auf die es nicht aufgeschoben werden kann, beispielsweise weil der Stiel ein Griffstück aufweist. Des Weiteren ist die erste Aufnahme dadurch, in Grenzen, flexibler was den Stieldurchmesser betrifft.

Die erste Aufnahme kann Omegaförmig ausgebildet sein, wobei die Schenkel der zweiten Aufnahme an den Enden der ersten Aufnahme angeordnet sind. In dieser Ausgestaltung ist der Grundkörper bandförmig ausgebildet, wobei das Band einen gleichmäßigen Durchmesser aufweist. Dadurch ist das Befestigungselement bei einer hohen Flexibilität besonders robust. Die Anlenkung der Schenkel erfolgt an den Enden des Omegas, wodurch sich eine günstige Hebelwirkung und damit eine einfache Bedienbarkeit und hohe Flexibilität ergibt.

Die Schenkel können bogenförmig ausgebildet sein. Dabei sind die Schenkel nach außen gekrümmt und es wird ein ovaler Raum eingeschlossen. Die gebogenen Schenkel weisen besonders vorteilhafte Federeigenschaften auf und es können Stiele mit einer großen Variabilität des Stieldurchmessers aufgenommen werden.

Die Schenkel können an deren freien Enden abgespreizt sein. Dadurch ist die Öffnung der zweiten Aufnahme trichterförmig aufgespreizt. Diese vorteilhafte Ausgestaltung vereinfacht das Aufstecken des Befestigungselementes auf einen Stiel.

Der Grundkörper kann materialeinheitlich und einstückig ausgebildet sein. Das ermöglicht eine kostengünstige und einfache Fertigung.

Der Grundkörper kann aus einem spritzgießfähigen Kunststoff bestehen. Derartige Kunststoffe sind beispielsweise Polyethylen oder Polypropylen. Diese Kunststoffe sind kostengünstig und ein Spritzgießprozess erlaubt eine kostengünstige Fertigung in hohen Stückzahlen.

Der Grundkörper kann zumindest teilweise eine Beschichtung mit einem Elastomer aufweisen. Diese Beschichtung ist vorzugsweise in den Bereichen angeordnet, an denen das Befestigungselement mit einem Stiel in Kontakt kommt. Durch die elastomere Beschichtung ergibt sich ein Bereich mit einer besonders hohen Haftreibung, so dass das Befestigungselement auch bei einer geringen Klemmkraft sicher befestigt ist.

### Kurzbeschreibung der Zeichnung

Einige Ausführungsbeispiele des erfindungsgemäßen Befestigungselementes werden nachfolgend anhand der Figuren näher erläutert. Diese zeigen, jeweils schematisch:
Fig. 1 ein Befestigungselement mit geschlossener erster Aufnahme;
Fig. 2 das Befestigungselement gemäß Figur 1 in perspektivischer Darstellung;

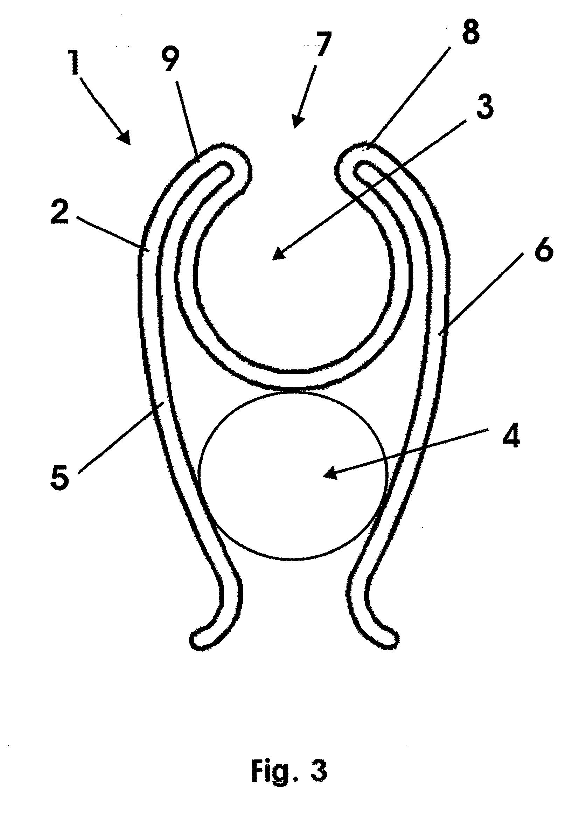

Fig. 3 ein Befestigungselement mit geöffneter erster Aufnahme;

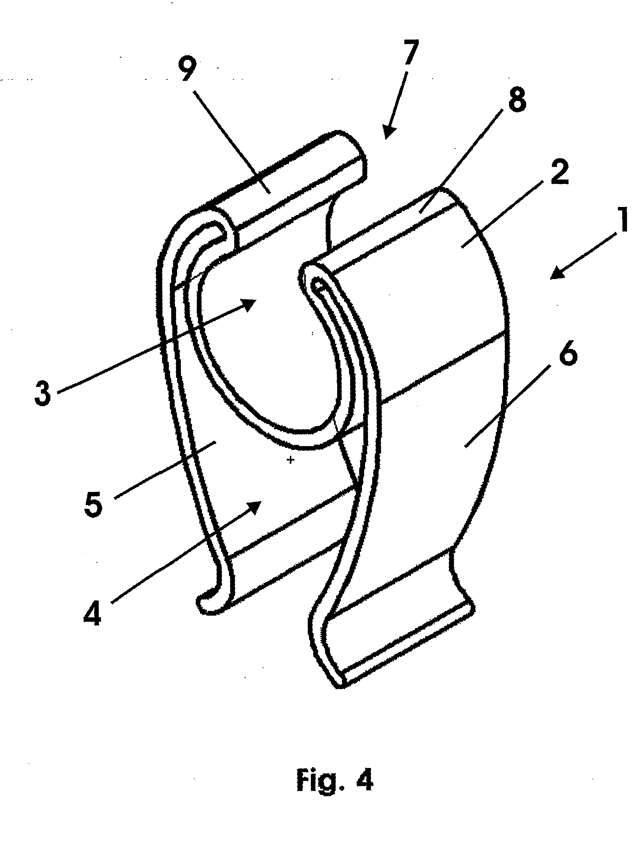

Fig. 4 das Befestigungselement gemäß Figur 3 in perspektivischer Darstellung.

### Ausführung der Erfindung

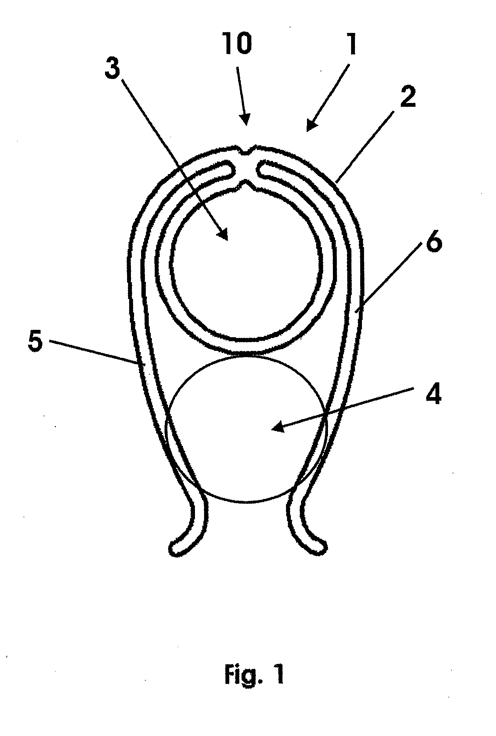

Figur 1 zeigt ein Befestigungselement 1 zur Verbindung mehrerer Reinigungsgerätestiele. Das Befestigungselement 1 besteht aus einem Grundkörper 2 der eine erste und eine zweite Aufnahme 3, 4 aufweist. Die erste Aufnahme 3 ist ringförmig ausgebildet und wird auf einen Stiel eines Reinigungsgerätes aufgeschoben. Die zweite Aufnahme 4 ist durch zwei klammerartige Schenkel 5, 6 gebildet, die so an die erste Aufnahme 3 angebunden sind, dass sie erste Aufnahme 3 teilweise umfassen. Die Anbindung der beiden Schenkel 5, 6 erfolgt auf dem der zweiten Aufnahme 4 abgewandten Scheitelpunkt 10 der ersten Aufnahme. Die beiden Schenkel 5, 6 sind bogenförmig ausgebildet und sind an deren freien Enden abgespreizt. Der Grundkörper 2 ist materialeinheitlich und einstückig aus Polypropylen mittels Spritzgießen hergestellt. Die Schenkel 5, 6 sind auf den einander zugewandten Seiten mit einer Beschichtung aus Silikon versehen.

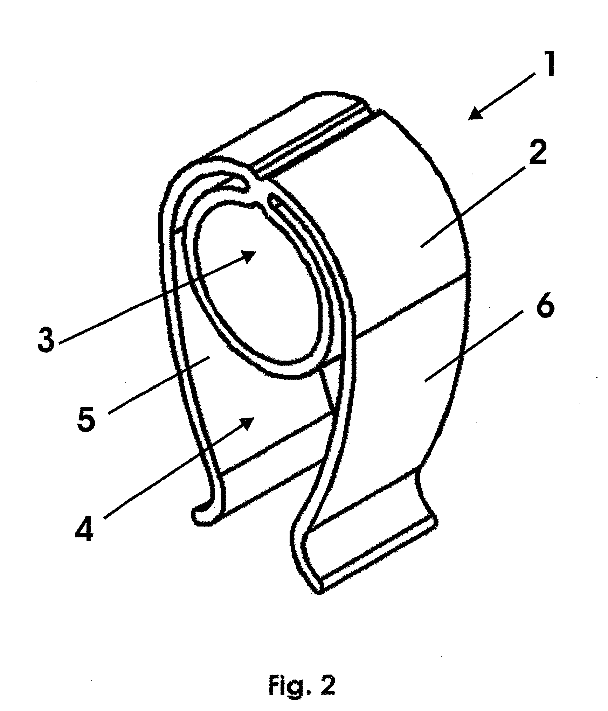

Figur 2 zeigt ein Befestigungselement 1 gemäß Figur 1, wobei der Ring der ersten Aufnahme 3 hier unterbrochen ist, so dass sich eine Öffnung 7 ergibt. Die Öffnung 7 vereinfacht das Aufstecken des Befestigungselements 1 auf einen Stiel. Die erste Aufnahme 3 ist Omegaförmig ausgebildet, wobei die Schenkel 5, 6 der zweiten Aufnahme 4 an den Enden 8, 9 der ersten Aufnahme 3 angeordnet sind. Durch diese Ausgestaltung ergibt sich ein bandförmiger Grundkörper 2 der besonders einfach herstellbar ist.

## Patentansprüche

1. Befestigungselement (1) bestehend aus einem Grundkörper (2) der eine erste und eine zweite Aufnahme (3, 4) aufweist, **dadurch gekennzeichnet, dass** die erste Aufnahme (3) ringförmig ausgebildet ist und die zweite Aufnahme (4) durch klammerartige Schenkel (5, 6) gebildet ist.

2. Befestigungselement nach Anspruch 1, **dadurch gekennzeichnet, dass** die Schenkel (5, 6) die erste Aufnahme (3) teilweise umfassen.

3. Befestigungselement nach Anspruch 1 oder 2, **dadurch gekennzeichnet, dass** der Ring der ersten Aufnahme (3) unterbrochen ist, so dass sich eine Öffnung (7) ergibt.

4. Befestigungselement nach einem der Ansprüch1 bis 3, **dadurch gekennzeichnet, dass** die erste Aufnahme (3) Omegaförmig ausgebildet ist, wobei die Schenkel (5, 6) der zweiten Aufnahme (4) an den Enden (8, 9) der ersten Aufnahme (3) angeordnet sind.

5. Befestigungselement nach einem der Ansprüche 1 bis 4, **dadurch gekennzeichnet, dass** die Schenkel (5, 6) bogenförmig ausgebildet sind.

6. Befestigungselement nach einem der Ansprüche 1 bis 5, **dadurch gekennzeichnet, dass** die Schenkel (5, 6) an deren freien Enden abgespreizt sind.

7. Befestigungselement nach einem der Ansprüche 1 bis 6, **dadurch gekennzeichnet, dass** der Grundkörper (2) materialeinheitlich und einstückig ausgebildet ist.

8. Befestigungselement nach einem der Ansprüche 1 bis 7, **dadurch gekennzeichnet, dass** der Grundkörper (2) aus einem spritzgießfähigen Kunststoff besteht.

9. Befestigungselement nach einem der Ansprüche 1 bis 8, **dadurch gekennzeichnet, dass** der Grundkörper (2) zumindest teilweise eine Beschichtung mit einem Elastomer aufweist.
